# EUROPEAN PATENT SPECIFICATION

(11) **EP 4 369 743 B1**
(45) Date of publication and mention of the grant of the patent: **27.08.2025**
(21) Application number: 23203221.9
(22) Date of filing: 12.10.2023
(51) Int. Cl.: H04W 4/02, H04W 4/80

(54) **SYSTEM FOR DETECTING A DEVICE IN PROXIMITY**
SYSTEM ZUR ERKENNUNG EINES GERÄTES IN DER NÄHE
SYSTÈME POUR LA DÉTECTION D'UN DISPOSITIF À PROXIMITÉ

(30) Priority: 10.11.2022 US 202218054181
(43) Date of publication of application: 15.05.2024
(73) Proprietor: Schneider Electric USA Inc., Boston, MA 02108 (US)
(72) Inventor: ANDERSON, David P., Boston, 02108 (US); KINGHAM, Brian Richard, Boston, 02108 (US)
(74) Representative: Murgitroyd & Company

(56) References cited:
- EP-A1- 3 029 970

## Description

### BACKGROUND

Certain types of electrical equipment may be equipped with user interfaces that users, such as equipment operators, may wish to access. However, some electrical equipment may be placed in areas that are inaccessible or otherwise difficult to access. It may be inconvenient for equipment operators to attempt to use electrical-equipment user interfaces that are difficult to physically access. Document EP3029970 discloses examples of systems and methods for proximity detection according to available prior art.

### SUMMARY

According to at least one aspect of the present invention, a proximity detection system is provided. The proximity detection system comprises an antenna configured to receive a signal provided by a device; a user interface; and at least one controller configured to: determine a distance of the device from the antenna; determine whether the distance is within a threshold distance of the antenna; determine, responsive to determining that the device is within the threshold distance, whether the device is known, wherein the device is known provided the device is present within the threshold distance of the antenna for a first threshold period of time, and the device is not known provided the device has not been within the threshold distance of the antenna for a second period of time, generate, responsive to determining that the device is not known, one or more instructions instructing the proximity detection system to activate the user interface, and execute the one or more instructions.

In various examples, the user interface includes a screen configured to display information responsive to receiving the one or more instructions, the information being based on an identity of the device. In many examples, determining that the device is not known includes determining an identity of the device; comparing the identity of the device to a list of known devices; and determining whether the identity of the device is contained in the list of known devices. In some examples, determining the identity of the device includes analyzing at least one packet header of the signal. In many examples, the system further comprises a memory and/or storage configured to be accessible to the at least one controller and to store the list of known devices. In various examples, the at least one controller is further configured to determine that the device is an authorized device, and to execute the one or more instructions responsive to determining that the signal originates from the authorized device, wherein the device is authorized provided the device is listed in a database of predetermined authorized devices.

In some examples, determining that the device is within the threshold distance includes determining a signal strength of the signal and, based on the signal strength of the signal, determining a distance of the device from the antenna. In various examples, the distance of the device from the antenna is determined based only on the signal strength of the signal.

According to at least one aspect of the present disclose, a method of detecting the proximity of a device is provided. The method comprises receiving a signal provided by the device; determining, based on the signal, a distance of the device from an antenna;determining whether the distance is within a threshold distance of the antenna; determining, based on the distance, that the device is not known, wherein the device is known provided the device is present within the threshold distance for a first threshold period of time, and the device is not known provided the device has not been within the threshold distance of the antenna for a second threshold period of time; generating, responsive to determining that the device is not known, one or more instructions instructing a user interface to activate; and providing the one or more instructions to the user interface..

In various examples, determining that the device is not known includes determining an identity of the device, comparing the identity of the device to a predetermined list of known devices, and determining that the identity of the device is not contained in the predetermined list of known devices. In various examples, the method further comprises determining that the device is an authorized device, wherein a device is authorized provided the device is listed in a database of predetermined authorized devices; and providing the one or more instructions responsive to determining that the signal originates from the authorized device. In some examples, the method further comprises determining whether the device is known responsive to determining that the device is within the threshold distance.

In various examples, determining that the device is within the threshold distance includes determining a signal strength of the signal and, based on the signal strength of the signal, determining the distance of the device from the antenna.

According to at least one aspect of the present disclosure, there is provided a non-transitory, computer-readable medium including instructions thereon, the instructions instructing at least one processor to receive a signal provided by a device; determine, based on the signal, a distance of the device from an antenna; determine whether the distance is within a threshold distance of the antenna; determine, based on the distance, whether the device is known, wherein the device is known provided the device is present within the threshold distance for a first threshold period of time, and the device is not known provided the device has not been within the threshold distance of the antenna for a second threshold period of time; generate, responsive to determining that the device is not known, one or more instructions instructing a user interface to activate; and provide the one or more instructions to the user interface..

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of a proximity sensing system according to an example;
FIG. 2 illustrates a block diagram of a controller, antenna, and memory and/or storage according to an example;
FIG. 3 illustrates a flowchart of a process for issuing instructions to equipment according to an example;
FIG. 4 illustrates a flowchart of a process for determining if a device is known according to an example;
FIG. 5 illustrates a flowchart of a process for determining if a device should be considered known according to an example; and
FIG. 6 illustrates a flowchart of a process for determining if a known device shown be no longer considered known according to an example.

### DETAILED DESCRIPTION

Examples of the methods and systems discussed herein are not limited in application to the details of construction and the arrangement of components set forth in the following description or illustrated in the accompanying drawings. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter.

References to "or" may be construed as inclusive so that any terms described using "or" may indicate any of a single, more than one, and all of the described terms.

As discussed above, certain types of electrical equipment may be equipped with user interfaces, such as display screens. Such electrical equipment may include a switchgear, for example, or any other type of electrical equipment. The user interfaces may provide information about corresponding electrical equipment, such as information about a switchgear. The user interfaces may additionally or alternatively receive inputs from a user to, for example, control the electrical equipment.

In some examples, the user interface corresponding to the electrical equipment may be accessed very infrequently. It may be advantageous for the user interface to be powered down when not in use. For example, if the user interface includes a display screen, it may be advantageous to shut the display screen down when a user is not viewing information displayed on the display screen. Accordingly, it may be advantageous for the user interface to be powered up when a user wishes to access the user interface, and to be powered down when the user does not wish to access the user interface.

In some examples, the user interface may include a button or switch to power the user interface up and/or down. For example, when a user wishes to access the user interface, the user may press the button or flip the switch to turn the user interface on. When the user has finished using the user interface, the user may press the button or flip the switch again to turn the user interface off. While such physical user-interface elements may enable a user to power a user interface up and down, some user interfaces may be difficult and/or inconvenient to physically access. Accordingly, it may be difficult or impossible for the user to reach a button or switch on the user interface and/or electrical equipment.

Examples of the disclosure provide a proximity-sensing system, which may be part of electrical equipment in some examples. The proximity-sensing system may detect when a user is nearby and, in response, power up a user interface. The system may detect the presence of a user device carried by the user based on signals originating from the device, and may use the presence of the user-device signals as a proxy for the presence of the user. In various examples, the proximity-sensing system may be capable of distinguishing between permanent devices (or "known devices") that are always present near the proximity-sensing system, such as other electrical equipment, and transient devices (or "new devices") that enter and leave an area near the proximity-sensing system, such as a user's smartphone. Because the devices are used as a proxy for a user's presence, it may be advantageous to power up the user interface only in response to new devices, because such devices are more likely to correspond to users coming and going. Conversely, known devices are more likely to be permanently installed equipment near the proximity-sensing system rather than user devices. Accordingly, the user interface may not be powered up in response to detecting permanent, known devices.

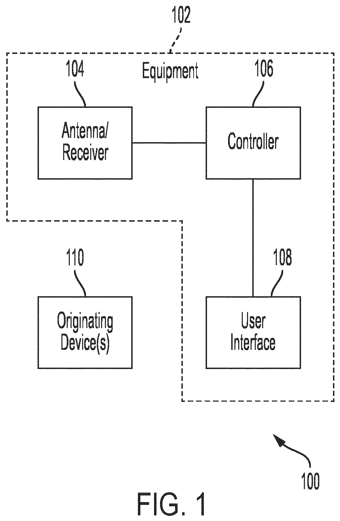

FIG. 1 illustrates a proximity sensing system 100 according to an example. The proximity sensing system 100 includes equipment 102, at least one antenna and/or receiver 104 ("antenna 104"), at least one controller 106 ("controller 106"), a user interface 108, and a user device 110 from which one or more signals originate ("originating device 110").

The equipment 102 includes the antenna 104, the controller 106, and the user interface 108. The antenna 104 is coupled to the controller 106. The controller 106 is coupled to the antenna 104 and to the user interface 108. In some examples, the originating device 110 may not be physically coupled to the equipment 102 or any other part of the system 100. For example, the originating device 110 may be a personal user device, such as a smartphone, carried by a user, such as an equipment operator. However, the equipment 102 may be configured to detect the presence and proximity of the originating device 110. In some examples, the originating device 110 may be communicatively coupled to the equipment 102, for example, via the antenna 104. That is, the originating device 110 may communicate with the equipment 102, for example, via the antenna 104. In some examples, the equipment 102 receives signals from the originating device 110 but does not transmit signals to the originating device 110.

In some examples, the equipment 102 may be power control equipment, such as an electrical switchgear. The power control equipment may include electrical equipment that may be difficult to access. For example, the equipment 102 may be placed in a secure place that is inaccessible or unduly burdensome to access. As discussed above, it may be advantageous to detect the proximity of a user without requiring the user to physically contact the equipment 102 at least because the equipment 102 may be difficult to access.

In some examples, the equipment 102 and/or a subcomponent of the equipment 102 (for example, the antenna 104, controller 106, and/or user interface 108) may be configured to detect the presence of the originating device 110 based on signals originating from the originating device 110. The equipment 102 may be configured to determine how close (that is, how proximate) the originating device 110 is to the equipment 102, and take an action based on proximity of the originating device 110 to the equipment 102.

The antenna 104 receives communication signals ("signals") and provides those signals to the controller 106. For example, the antenna 104 may receive wireless signals from the originating device 110. In some examples, the antenna 104 may provide the controller 106 with only a portion of the signals, for example, packet headers and/or other data contained within the signals. In some examples, the antenna 104 may provide the controller 106 with the entire signal. In various examples, signals received by the antenna 104 may be preprocessed and/or deciphered by a dedicated circuit coupled to the antenna prior to being provided to the controller 106.

The controller 106 controls the operation of all or part of the equipment 102. The controller 106 may control the equipment 102 based on signals received by the antenna 104. The controller 106 may determine, based on the received signals, whether the originating device 110 is a new device. If the originating device 110 is a new device, such as a smartphone on the person of a user who enters a room in which the equipment 102 is installed, the controller 106 may control the user interface 108 to power up and begin displaying information. Conversely, if the originating device 110 is a known device, such as another piece of electrical equipment installed next to the equipment 102, then the controller 106 may ignore the originating device 110 and not control the user interface 108 to power up since the known devices are not usually indicative of a user approaching the user interface 108.

In various examples, the controller 106 may also be configured to determine additional information such as a distance between the equipment 102 and the originating device 110 (for example, based on a signal strength of the received signal), an identity of the originating device 110, whether the originating device 110 is an authorized device, and so forth. In some examples, the controller 106 may use this additional information when determining whether to power up the user interface 108 and/or what information the user interface 108 is to display. For example, in some examples the controller 106 may only control the user interface 108 to power up if the originating device 110 is within a threshold distance from the equipment 102 for a threshold amount of time, as discussed in greater detail below.

The user interface 108 displays information to a user and allows a user to control the equipment 102. For example, the user interface 108 may display status or diagnostic information related to the equipment 102. The user interface 108 may also include controls a user can operate to control the equipment 102, such as by altering the status or function of the equipment 102. In some examples, the user interface 108 may include a screen, such as an LED screen, an LCD screen, and so forth. The user interface 108 may, in some examples, include a touch screen. In some examples, the user interface 108 may include a control panel having buttons, switches, levers, or other types of controls, though in some examples the control panel may be inconvenient to access. The user interface 108 may be configured to receive and respond to instructions from the controller 106. For example, as discussed above, the controller 106 may control the user interface 108 to display data about the equipment 102 responsive to determining, based on a new originating device 110, that a user is approaching the equipment 102. In some examples, the displayed data may be tailored to the originating device 110 or to the expected use of the user interface 108. For example, if the owner of the originating device 110 has previously used the user interface 108 and typically uses the user interface 108 to perform diagnostics, the controller 106 may instruct the user interface 108 to display diagnostic data.

As another example, the controller 106 may recognize the originating device 110 as having access to load data, and may control the user interface 108 to display load data. The controller 106 may therefore control the user interface 108 to display different information depending on whether or not the originating device 110 has previously been recognized by the controller 106. For example, if the controller 106 does not recognize the originating device 110 (because, for example, the originating device 110 is new to the area), the controller 106 may control the user interface 108 to display a default screen or information, or may cycle through various screens and information. When the controller 106 determines that the originating device 110 is no longer within the minimum threshold distance of the equipment 102, the controller 106 may instruct the user interface 108 to deactivate (that is, enter a low- or lower-power mode in which information is not displayed by the user interface 108).

The originating device 110 may be any device capable of transmitting signals, such as a smartphone, a laptop computer, a tablet computer, a smartwatch, a pager, specialized communication equipment, and so forth. In some examples, the originating device 110 may be associated with a particular person, company, or other user, and may be expected to move with the user. Accordingly, the controller 106 may use the originating device 110 as a proxy for presence and/or identity of a user who typically carries the originating device 110. For example, if the user moves within a threshold distance of the equipment 102, the originating device 110 may likewise move within the threshold distance of the equipment 102 given that the user likely has the originating device 110 on their person. Similarly, if the user moves out of the threshold distance, the originating device 110 may likewise move outside of the threshold distance. Accordingly, the originating device 110 may be considered to indicate the presence and location of a person or other user.

Because the originating device 110 may be uniquely identified, and because the originating device 110 can indicate the presence or location of a person, in some examples the originating device 110 may be associated with a specific person or type of person. For example, a given originating device 110 may be known to be associated with a particular technician (that is, a particular person) or a group of technicians (that is, a type or classification of persons, such as electrical-equipment operators). In some examples, the controller 106 may have access to a database of devices and associated persons or types of person, and thus controller 106 may be able to determine that a particular person or type of person is present based on the presence of the originating device 110. Accordingly, in some examples, the controller 106 may tailor the instructions provided to the user interface 108 such that the user interface 108 displays information and/or controls that are useful or desirable to the particular user or type of user whose presence is indicated by the originating device 110. More generally, the controller 106 may provide tailored instructions, information and/or controls for any user based on the device ID of the originating device 110.

The controller 106 may also determine the location of the originating device 110 based on the signal provided by the originating device 110, as described in more detail herein. In some examples, the controller 106 may be able to identify what equipment the originating device 110 is near, and activate the equipment based on the proximity of the originating device 110 to the equipment. In some examples, the controller 106 may enable functionalities of the equipment the originating device 110 is near to based on the expected needs of the person or type of person associated with the device ID of the originating device 110.

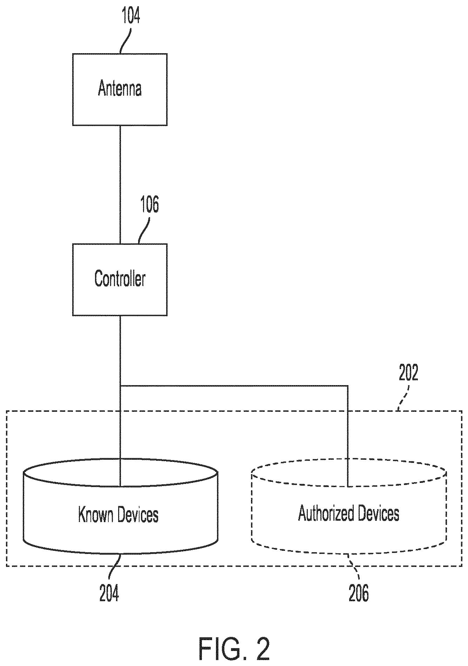

FIG. 2 illustrates a block diagram of the controller 106, the antenna 104, and memory and/or storage 202 ("memory 202") according to an example. The memory 202 includes a database of known devices 204 and a database of authorized devices 206. The database of known devices 204 may contain a list of one or more known devices. As discussed above, known devices may include permanent devices which are usually or permanently within a threshold distance of the equipment 102, such as other electrical equipment, as distinguished from user devices which come and go with users. The database of authorized devices 206 may contain a list of one or more authorized devices. As discussed in greater detail below, the controller 106 may activate the user interface 108 in response to detecting the presence of nearby authorized devices (that is, devices listed in the database of authorized devices 206), but may not activate the user interface 108 in response to detecting the presence of nearby non-authorized devices (that is, devices not listed in the database of authorized devices 206).

The controller 106 may regularly receive, from the antenna, 104, signals originating from one or more nearby devices. The nearby devices may be known devices and/or new devices. Furthermore, the nearby devices may be authorized and/or unauthorized devices. The controller 106 may control the user interface 108 based on whether the originating device 110 is listed as a known and/or authorized device within the database of known devices 204 or the database of authorized devices 206.

In various examples, the controller 106 may power up the user interface 108 only if at least one nearby device is a new, authorized device. For example, if the originating device 110 is a known (that is, not new) device, the controller 106 may not issue instructions to the user interface 108. Known devices may be more likely to correspond to permanent nearby electrical equipment which may not indicate that a user is nearby. If the originating device 110 is a new device (that is, not known), the controller 106 may issue an instruction to the user interface 108 to activate and display information or enable controls for use by the user of the originating device 110. New devices may be more likely to correspond to human users first entering an area, for example, for the purpose of accessing the user interface 108. In some examples, the controller 106 may only issue instructions instructing the user interface 108 to activate if the originating device 110 is both new and authorized. That is, the controller 106 may recognize that an originating device 110 is new, but may not take any action unless the originating device 110 is also considered authorized.

In various examples, an authorized device is a device contained in the list of authorized devices stored in the database of authorized devices 206. The authorized devices may be preselected or preprogrammed by an owner or operator of the equipment 102. In various examples, the list of authorized devices may be maintained and updated by the owner or operator of the equipment 102. By providing for authorized devices, the equipment 102 ensures that a new device (that is, a device that is not known) will not necessarily result in the controller 106 activating the user interface 108 unless the new device belongs to the list of authorized devices.

In some examples, a known device may be a device that has been within a minimum threshold distance of the equipment 102 for a threshold period of time. For example, if a device has been within 20 feet of the equipment 102 for at least 24 hours continuously (for example, because the device is a piece of electrical equipment permanently installed next to the equipment 102), the controller 106 may determine that the device is a known device. As discussed above, the equipment 102 may determine a distance between the equipment 102 and a device (for example, the originating device 110) based on signals received from the device. For example, a signal strength of the signal may be used to determine a distance between the equipment 102 and the device. Because signal strength may decrease as the signal propagates through space, the signal strength may be used to determine or approximate a distance between the equipment 102 and the originating device 110 that sent the signal. Accordingly, a threshold signal strength may be used to approximate a threshold distance.

A device may be considered new if the controller 106 has not received the signal with the threshold signal strength level for at least a threshold period of time. In various examples, the threshold period of time may be selected to be longer than a user would normally be within the threshold distance of the equipment 102. For example, if users are normally near the equipment 102 for no longer than 30 minutes, the threshold period of time may be selected to be some value greater than 30 minutes. Conversely, a device may be considered known if the equipment 102 has received the signal with at least a threshold signal strength level for at least a threshold period of time. In other examples, other parameters may be used to classify devices as new or known.

As an example of the functionality discussed above, the antenna 104 may receive a signal from the originating device 110. Various types of originating devices, such as smartphones, may regularly transmit signals by default. For example, some smartphones may regularly transmit Wi-Fi signals by default to search for Wi-Fi networks. The antenna 104 may receive and transduce these signals, and send the transduced signal to the controller 106. The controller 106 may determine, based on the signal, an identity of the originating device 110. The controller 106 may compare the identity of the originating device 110 to the database of known devices 204 and, in this example, determines that the originating device 110 is not a known device (that is, the device is not listed in the database of known devices 204) and thus may potentially be categorized as a new device. After a first threshold period of time the controller 106 may categorize the originating device 110 as a new device provided the signal remains above a threshold strength level for the first threshold period of time. By categorizing the originating device 110 as a new device only after the first threshold period of time, the controller 106 may avoid powering up the user interface 108 in response to stray signals, users simply passing by, or other such false-positive scenarios not indicating a user who wishes to use the user interface 108.

The controller 106 may update the database of known devices 204 over time. For example, if the originating device 110 remains present (for example, by being left behind accidentally by the user, or because the originating device 110 has become a permanent fixture of an area near the equipment 102), it may be desirable to no longer treat the originating device 110 as a new device. If the controller 106 determines that the originating device 110 is within the threshold distance for a threshold period of time, the controller 106 may determine that the originating device 110 is likely no longer indicative of the user of a user, and thus there may be no need to activate the user interface 108.

Similarly, if a known device is removed from the proximity of the equipment 102, the known device may be removed from the database of known devices 204. For example, if the originating device 110 is a smartphone accidentally left behind by a user, it may be desirable to remove the originating device 110 from the database of known devices 204. Accordingly, if an originating device 110 that is considered to be a known device is no longer providing a signal above the threshold strength level (for example, because the originating device 110 has been moved away from the equipment 102), the controller 106 may no longer categorize the originating device 110 as a known device. In some examples, the controller 106 may no longer categorize the originating device 110 as a known device if a threshold period of time passes since the controller 106 last received a signal from the known originating device 110.

In some examples, the controller 106 may activate the user interface 108 only if the originating device 110 is an authorized device. An authorized device may be a device that is listed on a list stored in the database of authorized devices 206. Authorized devices may be devices that are likely to correspond to users who typically need or want access to the user interface 108. For example, if the equipment 102 is an electrical switchgear, authorized users may include equipment operators who frequently operate and monitor the switchgear. Conversely, cleaning personnel who occasionally clean an area around the switchgear may not need or want access to the switchgear. Accordingly, it may be advantageous for the controller 106 to be able to distinguish between authorized users, such as equipment operators in the above example, and unauthorized users, such as cleaning personnel in the above example.

The database of authorized devices 206 may contain a database of devices authorized to access the user interface 108. The controller 106 may access the database of authorized devices 206 to check whether a given originating device 110 is authorized prior to powering up the user interface 108. If the originating device 110 is not authorized, the controller 106 may control the user interface 108 to remain off and/or to go into a locked or protected mode. Controlling the user interface 108 to remain off may include simply doing nothing, that is, not powering the user interface 108 up nor taking any other action. Conversely, if the controller 106 determines that the originating device 110 is authorized, the controller 106 may instruct the user interface 108 to activate and/or to switch to an unlocked or unprotected mode. By distinguishing between authorized and unauthorized devices, the controller 106 may ensure that the functionality of the equipment 102 and/or the user interface 108 is provided only to devices that are authorized to access that functionality, whether or not the devices are new. In various examples, whether the device is authorized or not, the controller 106 may only issue instructions if the originating device 110 is a new device rather than a known device.

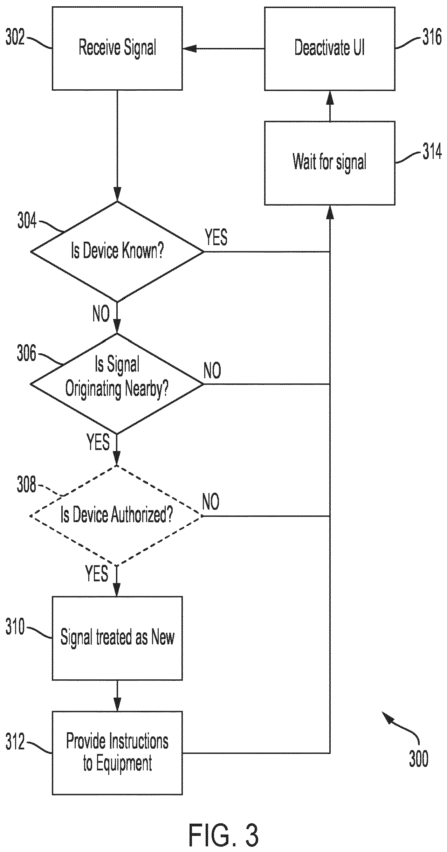

FIG. 3 illustrates a process 300 of operating the equipment 102 according to an example. For purposes of explanation, the process 300 will be described with respect to an example in which the controller 106 executes the process 300.

At act 302, the controller 106 receives a signal. For example, the originating device 110 may send the signal. The originating device 110 may repeatedly transmit certain signals by default, such as Wi-Fi signals searching for a Wi-Fi network. The antenna 104 may receive the signal, transduce the signal, and send the transduced signal to the controller 106. The signal may include identifying information indicative of the originating device 110, such as a MAC address or other form of device identification. For example, the signal may include packet headers that include various types of information about the signal, including the identifying information. The process 300 then proceeds to act 304. For the purpose of clarity, in the following acts, the signal provided by the originating device 110 and/or the originating device 110 will be referred simply as the originating device 110 unless otherwise specified.

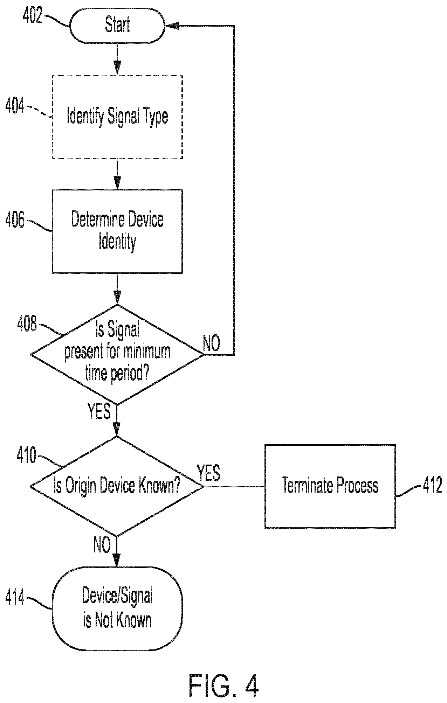

At act 304, the controller 106 determines whether the originating device 110 is a known device. The controller 106 may determine whether the originating device 110 is known using any of various methods. An example of act 304 is provided below with respect to FIG. 4. For purposes of explanation, in one example of act 304 the controller 106 may determine an identity of the originating device 110 (or "device ID") based on the identifying information determined at act 302, and compare the identity of the originating device 110 to a list of known device IDs stored in the database of known devices 204. If the device ID does not match a known device ID in the database of known devices 204, then the originating device 110 is considered to be not known.

If the controller 106 determines that the originating device 110 is known (304 YES), such as because the device ID is already present in the database of known devices 204, then the controller 106 may ignore the signal and the process 300 continues to act 314. At act 314, the controller 106 awaits a new signal. As discussed above, known devices may be devices that are permanently or usually present near the equipment 102. Such known devices may not warrant powering up the user interface 108 because known devices are unlikely to correspond to users approaching the equipment 102. Accordingly, the process 300 continues to 314 and, when a new signal is received at act 302, act 304 may be repeated. If the controller 304 determines that the originating device 110 is not known (304 NO), then the process 300 continues to act 306.

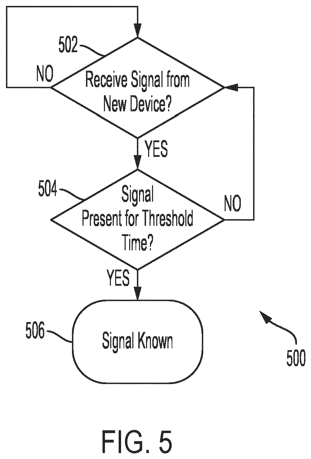

At act 306, the controller 106 determines whether the originating device 110 is nearby. In some examples, the controller 106 may determine that an originating device 110 is "nearby" if the originating device 110 is within a threshold distance of the equipment 102. The controller 106 may determine a distance between the equipment 102 and the originating device 110 based on the signal strength (for example, as indicated by a received signal strength indicator ["RSSI"] of the signal) of the signal provided by the originating device 110. Because signal strength is proportional to the distance from a signal source, the signal strength may be used to determine a distance between the equipment 102 and the originating device 110. In some examples, the controller 106 may determine a distance based on the RSSI and compare the distance to a threshold distance. In other examples, the controller 106 may directly determine whether the signal strength is above a threshold signal strength. An example of act 306 is discussed in greater detail below with respect to FIG. 5.

If the controller 106 determines that the originating device 110 is not nearby (306 NO), then the process 300 continues to act 314. Acts 314 and 302-306 may be repeated until the controller 106 determines that the originating device 110 is nearby. If the controller 106 determines that the originating device 110 is nearby (306 YES), then the process 300 may continue to optional act 308.

At optional act 308, the controller 106 determines whether the originating device 110 is authorized. As discussed above with respect to act 304, the controller 106 may determine an identity of the originating device 110 (or "device ID") based on the identifying information determined at act 302. At optional act 308, the controller 106 may compare the device ID to the database of authorized devices 206. If the device ID matches an entry in the database of authorized devices 206, the controller 106 may determine that the originating device 110 is authorized. If the device ID does not match any entry in the database of authorized devices 206, the controller 106 may determine that the originating device 110 is not authorized. In various examples, authorization need not be limited to device IDs. For example, authorization may be limited to particular types of signals, such as Bluetooth signals. That is, in some examples, any Bluetooth signal will be considered authorized, while signals of any other type will be considered unauthorized. Furthermore, in various examples, any combination of authorization requirements may be used. For example, a signal may be required to contain appropriate device ID information matching a known device and be a specific type of signal, such as a Wi-Fi signal, to be considered authorized. In some examples, the signal may contain a unique ID. For example, a base layer of a signal may contain a hardware-specific ID, such as a MAC address, that is unique in the entire world. Accordingly, in examples where the base layer may contain a unique ID, there may not be a need to consider any other part of the signal. The unique device ID may be an appropriate ID for a given communication standard. For example, in the Bluetooth communication standard, devices may have a 48-bit identification number that uniquely identifies the device. Other communication standards may have other unique identifiers which may be used.

Because, in some examples, the controller 106 does not need to provide any data to the originating device 110 to determine an identity of the originating device 110 (for example, because the device-ID information is contained within the signal provided by the originating device 110 to begin with), there may not be a need for a full "handshake" between the controller 106 and the originating device 110. That is, the controller 106 and originating device 110 need not establish authenticated two-way communication between each other. Instead, the controller 106 may only passively receive signals from the originating device 110, and not provide or transmit any kind of signal to the originating device 110 in various examples.

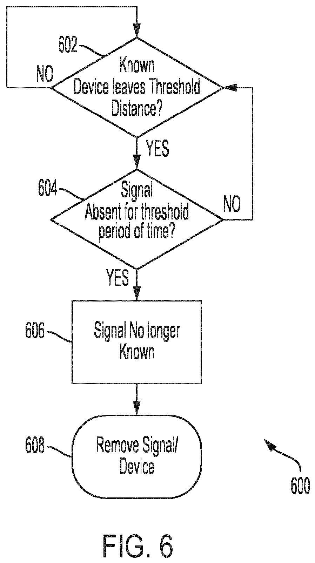

If the controller 106 determines that a device is authorized (308 YES), the process 300 continues to act 310. If the controller 106 determines that the device and/or signal is not authorized (308 NO), the process 300 continues to act 314. In examples in which optional act 308 is not executed, the process 300 may proceed directly from 306 YES to act 310. An example of optional act 308 is discussed in greater detail with respect to FIG. 6.

At act 310, the controller 106 controls one or more components of the equipment 102. For example, the controller 106 may control the user interface 108 to activate (that is, to power up and display information). As discussed above, determining that a signal is new (304 NO), nearby (306 YES), and, optionally, authorized (308 YES) may be indicative of an authorized user approaching the equipment 102 and wishing to access the user interface 108. Accordingly, the controller 106 may automatically activate the user interface 108 responsive to detecting the user. The process 300 may then proceed to act 314.

As discussed above, at act 314, the controller 106 waits to receive a signal and may proceed to act 302 when a signal is received. In some examples, while waiting to a receive a signal, the process 300 may continue from act 314 to act 316.

At act 316, the controller 106 may deactivate the user interface 108. In some examples, the controller 106 may control the user interface 108 to deactivate after a threshold period of time during which a new originating device 110 is not detected or present. In some examples, if the user interface 108 is not used for the threshold period of time, regardless of whether a new originating device 110 is present, the controller 106 may control the user interface 108 to deactivate.

FIG. 4 illustrates a process 400 of determining whether an originating device 110 is known according to an example. As discussed above, the process 400 may provide one example of the act 304. For purposes of explanation, the acts of the process 400 will be described with respect to an example in which the controller 106 executes the process 400.

At act 402, the process 400 begins.

At optional act 404, the controller 106 identifies a signal type of the signal received from the originating device 110 at act 302. As discussed below, the signal type of the signal may affect how the controller 106 determines whether the originating device 110 is a known device. For example, the controller 106 may determine various characteristics of the signal, including whether the signal is a radio signal, an optical signal, or another type of signal, and/or the communication protocol of the signal (for example, whether the signal is a Bluetooth signal, a Wi-Fi signal, a cellular signal transmitted according to a cellular-communications protocol, a satellite signal transmitted according to a satellite-communications protocol, and so forth). The controller 106 may determine the threshold signal strength, threshold distance, and any threshold time periods based on the type of signal. For example, a Bluetooth signal may have a higher threshold signal strength compared to a Wi-Fi signal. The process 400 may then proceed to act 406. In examples in which optional act 404 is not executed, the process 400 may proceed directly to act 406 from act 402.

At act 406, the controller 106 may analyze the contents of the signal to determine an identity of the originating device 110. As discussed above, an identity of a device may be denoted by a device ID. For example, the controller 106 may analyze packet headers or other information contained in the signal to determine an identity of the originating device 110. The controller 106 may determine identifying characteristics of the originating device 110 such as a MAC address or other form of unique device ID. The controller 106 may monitor the signal. For example, the controller 106 may monitor changes in the signal over time, how long the signal lasts, and so forth. The controller 106 may also analyze features of the signal, for example, a strength and/or power level of the signal (for example, an RSSI of the signal), a frequency of the signal, an amplitude of the signal, and/or other signal characteristics. The process 400 may then proceed to act 408.

At act 408, the controller 106 determines whether the originating device 110 has been present for at least a threshold time period. As discussed above, it may be advantageous to avoid powering up the user interface 108 in response to certain new devices. For example, if a user is simply passing by without wishing to access the user interface 108, it may be advantageous to avoid powering up the user interface 108. Accordingly, the threshold time period may be implemented such that, in some examples, the user interface 108 is powered up only if a device bearing the device ID determined at act 406 is present for at least the threshold time period. The threshold time period may be any amount of time, for examples, a few seconds, minutes, hours, and so forth. To determine whether an originating device 110 is present for the threshold time period, the controller 106 may measure an amount of time that the originating device 110 has been continuously detected from when the originating device 110 is first detected (for example, when a signal from the originating device 110 is first detected). If the originating device 110 does not provide a signal for at least the threshold amount of time (408 NO), the process 400 may return to act 402. Acts 402-408 may be repeated until the controller 106 determines that the signal has been received for the threshold amount of time (408 YES), at which point the process 400 may continue to act 410.

At act 410, the controller 106 compares the device ID to a database of known devices and/or signals to determine whether the device ID is known. For example, the controller 106 may use the database of known devices 204 to determine whether the device and/or signal is contained in the database. If the device and/or signal is contained in the database of known devices 204 (410 YES), the process 400 may continue to act 412. If the device and/or signal is not contained in the database of known devices 204 (410 NO), the process 400 may continue to act 414.

At act 412, the process 400 may end. In some examples, the controller 106 may return to an act of another process, for example, act 314 of process 300.

At act 414, the controller 106 may identify the device as not known, that is, as a new device. In examples in which the process 400 is an example of act 304, act 414 may indicate the controller 106 determining that the device is not known (304 NO) and the process 300 continuing to act 306.

FIG. 5 illustrates a process 500 of how the controller 106 may determine that an originating device 110 should be considered known and/or added to the database of known device 204 according to an example. The controller 106 may execute the process 500 at any time. In some examples, the controller 106 may execute the process 500 independently of the process 300. The controller 106 may execute the process 500 simultaneously with the process 300 to identify devices that should be categorized as known. For example, if a new piece of equipment is installed next to the equipment 102, the new piece of equipment may initially be considered a new device. However, it may be advantageous to categorize the new piece of equipment as a known device once it becomes apparent that the new piece of equipment is not indicative of a user approaching the equipment 102. In this example, the process 500 may be executed to identify the new piece of equipment as a known device to be added to the database of known devices 204. In some examples, the process 500 may be executed by additional or different devices than the controller 106. For purposes of explanation, the acts of process 500 will be described with respect to the controller 106.

At act 502, the controller 106 determines whether the controller 106 has received a signal from a new (that is, not known) originating device 110. That is, the controller 106 treats the originating device 110 as new as described with respect to, for example, act 310 of process 300. If the controller 106 determines that the signal is received from a new device (502 YES) the process 500 may continue to act 504. If the controller 106 determines that the signal is not received from a new device (502 NO), the controller 106 may repeat act 502, for example, until a signal from a new device is received.

At act 504, the controller 106 determines whether the originating device 110 remains within a threshold distance from the equipment 102 for a threshold period of time. As discussed above, a distance between the originating device 110 and the equipment 102 may be determined and/or approximated based on a signal strength of the signal transmitted by the originating device 110. Accordingly, determining whether the originating device 110 is within a threshold distance may include determining whether the signal strength is above a threshold signal strength. In another example, determining whether the originating device 110 is within a threshold distance may include determining or approximating a distance between the equipment 102 and the originating device 110 based on the signal strength, and determining whether the distance is within a threshold distance. In some examples, the threshold signal strength and/or threshold distance may be the thresholds discussed above with respect to act 306. In other examples, the thresholds of act 504 may differ from those of act 306.

If the controller 106 determines that the originating device 110 is not within the threshold distance for at least the threshold period of time (504 NO), then the process 500 may return to act 502 or an earlier act, such as act 314. Acts 502 and 504 may be repeated until a determination is made that either the signal is no longer present (502 NO), or that the threshold period of time has been satisfied (504 YES). If the controller 106 determines that the originating device 110 is within the threshold distance for the threshold period of time (504 YES), the process 500 may continue to act 506.

At act 506, the controller 106 determines that the originating device 110 should be considered a known (or permanent) device, and may add the originating device 110 to the database of known devices 204. As a result, in some examples, the controller 106 will no longer activate the user interface 108, for example, responsive to detecting the originating device 110 in proximity to the equipment 102. For example, instead of activating the user interface 108 of the equipment 102 responsive to a new device (for example, a new originating device 110) coming into proximity to the equipment 102, the controller 106 may instead do nothing.

FIG. 6 illustrates a process 600 of removing a known device from the database of known device 204 according to an example. In some examples, a device may initially be categorized as a known device, that is, a device not indicative of the presence of a user, but may later actually be indicative of the presence of a user. For example, if a user accidentally leaves their smartphone near the equipment 102 over a weekend, the smartphone may be categorized as a known device pursuant to the process 500. However, once the user retrieves the smartphone, it may be desirable to no longer treat the smartphone as a known device since the smartphone will once again be indicative of a user coming and going. The process 600 provides an example of removing devices from the database of known devices 204. The process 600 may be executed at any time independently from the processes 300 and/or 500, such as in parallel with the processes 300 and/or 500. For purposes of example, the acts of process 600 will be described with respect to the controller 106.

At act 602, the controller 106 determines whether a known originating device 110 is not within or has left a threshold distance of the equipment 102. The originating device 110 may be a unique device previously considered known to the system, for example, a device determined to be known as described with respect to the process 500. The controller 106 may determine that the originating device 110 is not within the threshold distance by, for example, determining that a signal strength of a signal received from the originating device 110 is below a threshold signal strength as discussed above. If the controller 106 determines that the originating device 110 is not within the threshold distance or has left the threshold distance (602 YES), the process 600 may continue to act 604. If the controller 106 determines that the originating device 110 is still within the threshold distance or has not left the threshold distance (602 NO), the process 600 may return to act 602 and continue to monitor known devices until a known device leaves the threshold distance.

At act 604, the controller 106 determines whether the originating device 110 has been outside of the threshold distance to the equipment 102 for a threshold period of time. For example, the controller 106 may determine whether a threshold amount of time has elapsed since the originating device 110 was last within the threshold distance from the equipment 102. If the controller 106 determines that the originating device 110 has been outside of the threshold distance for the threshold period of time (604 YES), then the process 600 may continue to act 606. If the controller 106 determines that the device has not been outside of the threshold distance for the threshold period of time (604 NO), then the process 600 may return to act 602.

At act 606, the controller 106 determines that the originating device 110 should no longer be treated as a known device. For example, the controller 106 may remove a device ID corresponding to the originating device 110 from the database of known devices 204, or otherwise alter treatment of the originating device 110 such that the originating device 110 may be treated as new in the future.

Various threshold periods of time have been discussed above including, for example, a threshold period of time that a device should be present before being classified as a known device (as discussed above at act 504) and a threshold period of time that a device should be absent before being declassified as a known device (as discussed above at act 604). In various examples, the threshold periods of time discussed above need not be the same as any other threshold periods of times for other processes described herein, and may vary based on communication protocol, user settings, and so forth. For example, a threshold period of time for a device to be classified as a known device may be approximately 24 hours, whereas a threshold period of time for a device to be declassified as a known device may be approximately five minutes. Accordingly, threshold periods of time may be selected independently from one another.

The antenna 104 may be configured to receive and/or transduce signals originating from an external device, such as the originating device 110. Signals may include radio-frequency (RF) signals, optical signals, and so forth. Examples of RF signals include Wi-Fi signals, Bluetooth signals, cellular signals, and so forth. In some examples, the antenna 104 is not configured to transmit signals. Instead, the antenna 104 may be configured only to receive and/or sense signals. However, in some examples, the antenna 104 may be configured to transmit signals as well. In some examples, the antenna 104 may include several antennas each corresponding to respective, specific communication protocols. For example, the antenna 104 may include a first antenna corresponding to Bluetooth signals and a second antenna corresponding to Wi-Fi signals. The antenna 104 may be coupled to a circuit designed to process signals according to one or more specific protocols. For example, the at least one antenna 104 may be coupled to a peripheral component interconnect Bluetooth card, a cellular card, or a Wi-Fi card configured to automatically interpret any signal received by the antenna 104 according to the respective communication protocol.

In some examples, the antenna 104 includes multiple antennas, and the controller 106 is configured to process signals received at a given antenna according to a specific protocol or signal type. For example, a first antenna may be configured to provide a received signal to a portion of the controller 106, or a separate circuit, that processes the signal as though the signal were one type of signal and/or protocol (for example, RF and Bluetooth). A second antenna may be configured to provide the received signal to a portion of the controller 106, or a separate circuit, that processes the signal as though the signal were a different type of signal and/or protocol (for example, RF and cellular). In various examples, if the signal is received by an antenna coupled to a portion of the circuit that does not automatically interpret the signal according to the appropriate communication protocol, the antenna or portion of the circuit may ignore the signal, whereas if the same signal is simultaneously received by an antenna or portion of the circuit that can understand the signal, the signal may be processed into meaningful data.

In some examples, the threshold signal strength may depend on the type of device or signal and/or an expectation of the type of device or signal. In some examples, the controller 106 may determine that the originating device 110 is nearby based on data contained in the signal, for example, GPS coordinate information or other location data.

The controller 106 may be configured to provide instructions to the equipment 102 and/or the user interface 108 and/or may directly control the equipment 102 and/or the user interface 108. In some examples, the controller 106 may be coupled to or include storage and/or memory, and may have access to at least one database of known devices and/or authorized devices. In some examples, instructions that the controller 106 provides to the equipment 102 and/or the user interface 108 may be based on whether the communications signal and/or the originating device 110 is new and/or authorized, may be based on the location of the communications signal and/or the originating device 110, and/or may be based on any other characteristic of the communications signal and/or the originating device 110.

In some examples, the controller 106 may use a table or equations that relate the signal strength of a given signal to a distance or range of distances of the originating device 110 of the signal from the equipment 102 receiving the signal.

The controller 106 may be coupled to the memory 202. In some examples, the controller 106 may be able to access databases contained within the memory 202. The memory 202 may be integrated into the controller 106 in some examples, or may be coupled to the controller 106, or may be stored elsewhere, such as on a cloud-based server infrastructure or elsewhere in the equipment 202, and so forth. The authorized devices may be preset, programmable, adjustable, or otherwise static or changeable. For example, the database of authorized devices 206 may be updated via a network connection.

In some cases, the originating device 110 may be permanently stationed near the equipment 102. For example, the originating device 110 could be a satellite communications dish configured to transmit and receive communications signal, or a 5G base station configured to receive or transmit communications signals, and so forth. In various examples, the originating devices 110 described herein may be mobile, immobile, transitory, or permanent.

Various controllers, such as the controller 106, may execute various operations discussed above. Using data stored in associated memory and/or storage, the controller 106 also executes one or more instructions stored on one or more non-transitory computer-readable media, which the controller 106 may include and/or be coupled to, that may result in manipulated data. In some examples, the controller 106 may include one or more processors or other types of controllers. In one example, the controller 106 is or includes at least one processor. In another example, the controller 106 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.
The scope of the present invention is determined by the claims. Accordingly, the foregoing description and drawings are by way of example only.

## Claims

1. A proximity detection system (102) comprising:
an antenna (104) configured to receive a signal provided by a device (110);
a user interface (108); and
at least one controller (106) configured to
determine a distance of the device from the antenna,
determine whether the distance is within a threshold distance of the antenna,
determine, responsive to determining that the device is within the threshold distance of the antenna, whether the device is known, wherein the device is known provided the device is present within the threshold distance of the antenna for a first threshold period of time, and the device is not known provided the device has not been within the threshold distance of the antenna for a second threshold period of time,
generate, responsive to determining that the device is not known, one or more instructions instructing the proximity detection system to activate the user interface, and
execute the one or more instructions.

2. The system of claim 1, wherein the user interface includes a screen configured to display information responsive to receiving the one or more instructions, the information being based on an identity of the device.

3. The system of claim 1, wherein determining that the device is not known includes:
determining an identity of the device;
comparing the identity of the device to a list of known devices; and
determining whether the identity of the device is contained in the list of known devices.

4. The system of claim 3, wherein determining the identity of the device includes analyzing at least one packet header of the signal.

5. The system of claim 3, further comprising a memory and/or storage configured to be accessible to the at least one controller and to store the list of known devices.

6. The system of claim 1, wherein the at least one controller is further configured to determine that the device is an authorized device, and to execute the one or more instructions responsive to determining that the signal originates from the authorized device, wherein the device is authorized provided the device is listed in a database of predetermined authorized devices.

7. The system of claim 1, wherein determining that the device is within the threshold distance includes determining a signal strength of the signal and, based on the signal strength of the signal, determining the distance of the device from the antenna.

8. The system of claim 7, wherein the distance of the device from the antenna is determined based only on the signal strength of the signal.

9. A method of detecting the proximity of a device (110), the method comprising:
receiving (302) a signal provided by the device;
determining, based on the signal, a distance of the device from an antenna (104);
determining (306)whether the distance is within a threshold distance of the antenna;
determining (304), based on the distance, that the device is not known, wherein the device is known provided the device is present within the threshold distance for a first threshold period of time, and the device is not known provided the device has not been within the threshold distance of the antenna for a second threshold period of time;
generating, responsive to determining that the device is not known, one or more instructions instructing a user interface (108) to activate; and
execute the one or more instructions.

10. The method of claim 9, wherein determining that the device is not known includes determining an identity of the device, comparing the identity of the device to a predetermined list of known devices, and determining that the identity of the device is not contained in the predetermined list of known devices.

11. The method of claim 9, further comprising:
determining that the device is an authorized device, wherein a device is authorized provided the device is listed in a database of predetermined authorized devices; and
providing the one or more instructions responsive to determining that the signal originates from the authorized device.

12. The method of claim 9, further comprising:
determining whether the device is known responsive to determining that the device is within the threshold distance.

13. The method of claim 12, wherein determining that the device is within the threshold distance includes determining a signal strength of the signal and, based on the signal strength of the signal, determining the distance of the device from the antenna.

14. A non-transitory, computer-readable medium including instructions, which, when executed by a proximity detection system comprising an antenna, a user interface, and a controller, cause the proximity detection system to perform the method of any of claims 9-13.

## Patentansprüche

1. Ein Näheerkennungssystem (102), das Folgendes beinhaltet:
eine Antenne (104), die konfiguriert ist, um ein Signal zu empfangen, das von einem Gerät (110) bereitgestellt wird;
eine Benutzerschnittstelle (108); und
mindestens eine Steuereinheit (106), die konfiguriert ist zum:
Feststellen einer Entfernung des Geräts von der Antenne, Feststellen, ob die Entfernung innerhalb einer Schwellenentfernung der Antenne liegt,
Feststellen, als Reaktion auf das Feststellen, dass das Gerät innerhalb der Schwellenentfernung der Antenne liegt, ob das Gerät bekannt ist, wobei das Gerät unter der Voraussetzung, dass das Gerät innerhalb der Schwellenentfernung der Antenne für eine erste Schwellenwertdauer vorhanden ist, bekannt ist und das Gerät unter der Voraussetzung, dass das Gerät nicht innerhalb der Schwellenentfernung der Antenne für eine zweite Schwellenwertdauer gewesen ist, nicht bekannt ist,
Erzeugen, als Reaktion auf das Feststellen, dass das Gerät nicht bekannt ist, von einer oder mehreren Anweisungen, die das Näheerkennungssystem anweisen,
die Benutzerschnittstelle zu aktivieren, und
Ausführen der einen oder mehreren Anweisungen.

2. System gemäß Anspruch 1, wobei die Benutzerschnittstelle einen Bildschirm umfasst, der konfiguriert ist, um als Reaktion auf das Empfangen der einen oder der mehreren Anweisungen Informationen anzuzeigen, wobei die Informationen auf einer Identität des Geräts basieren.

3. System gemäß Anspruch 1, wobei das Feststellen, dass das Gerät nicht bekannt ist, Folgendes umfasst:
Feststellen einer Identität des Geräts;
Vergleichen der Identität des Geräts mit einer Liste von bekannten Geräten; und
Feststellen, ob die Identität des Geräts in der Liste von bekannten Geräte enthalten ist.

4. System gemäß Anspruch 3, wobei das Feststellen der Identität des Geräts das Analysieren von mindestens einem Paketkopf des Signals umfasst.

5. System gemäß Anspruch 3, das ferner einen Speicher und/oder ein Speicherelement beinhaltet, der/das konfiguriert ist, um für die mindestens eine Steuereinheit zugänglich zu sein und die Liste von bekannten Geräten zu speichern.

6. System gemäß Anspruch 1, wobei die mindestens eine Steuereinheit ferner konfiguriert ist, festzustellen, dass das Gerät ein autorisiertes Gerät ist, und als Reaktion auf das Feststellen, dass das Signal aus dem autorisierten Gerät stammt, die eine oder die mehreren Anweisungen auszuführen, wobei das Gerät, unter der Voraussetzung, dass das Gerät in einer Datenbank von vorgegebenen autorisierten Geräten aufgelistet ist, autorisiert ist.

7. System gemäß Anspruch 1, wobei das Feststellen, dass das Gerät innerhalb der Schwellenentfernung liegt, das Feststellen einer Signalstärke des Signals und, basierend auf der Signalstärke des Signals, das Feststellen der Entfernung des Geräts von der Antenne umfasst.

8. System gemäß Anspruch 7, wobei die Entfernung des Geräts von der Antenne nur basierend auf der Signalstärke des Signals festgestellt wird.

9. Ein Verfahren zum Erkennen der Nähe eines Geräts (110), wobei das Verfahren Folgendes beinhaltet:
Empfangen (302) eines Signals, das von dem Gerät bereitgestellt wird;
Feststellen, basierend auf dem Signal, einer Entfernung des Geräts von einer Antenne (104);
Feststellen (306), ob die Entfernung innerhalb einer Schwellenentfernung der Antenne liegt;
Feststellen (304), basierend auf der Entfernung, dass das Gerät nicht bekannt ist,
wobei das Gerät unter der Voraussetzung, dass das Gerät innerhalb der Schwellenentfernung für eine erste Schwellenwertdauer vorhanden ist, bekannt ist und das Gerät unter der Voraussetzung, dass das Gerät nicht innerhalb der Schwellenentfernung der Antenne für eine zweite Schwellenwertdauer gewesen ist,
nicht bekannt ist;
Erzeugen, als Reaktion auf das Feststellen, dass das Gerät nicht bekannt ist, von einer oder mehreren Anweisungen, die eine Benutzerschnittstelle (108) anweisen, aktiviert zu werden; und
Ausführen der einen oder mehreren Anweisungen.

10. Verfahren gemäß Anspruch 9, wobei das Feststellen, dass das Gerät nicht bekannt ist, das Feststellen einer Identität des Geräts, das Vergleichen der Identität des Geräts mit einer vorgegebenen Liste von bekannten Geräten und das Feststellen, dass die Identität des Geräts nicht in der vorgegebenen Liste von bekannten Geräte enthalten ist, umfasst.

11. Verfahren gemäß Anspruch 9, das ferner Folgendes beinhaltet:
Feststellen, dass das Gerät ein autorisiertes Gerät ist, wobei ein Gerät, unter der Voraussetzung, dass das Gerät in einer Datenbank von vorgegebenen autorisierten Geräten aufgelistet ist, autorisiert ist; und
Bereitstellen der einen oder mehreren Anweisungen als Reaktion auf das Feststellen, dass das Signal aus dem autorisierten Gerät stammt.

12. Verfahren gemäß Anspruch 9, das ferner Folgendes beinhaltet:
Feststellen, ob das Gerät bekannt ist, als Reaktion auf das Feststellen, dass das Gerät innerhalb der Schwellenentfernung liegt.

13. Verfahren gemäß Anspruch 12, wobei das Feststellen, dass das Gerät innerhalb der Schwellenentfernung liegt, das Feststellen einer Signalstärke des Signals und, basierend auf der Signalstärke des Signals, das Feststellen der Entfernung des Geräts von der Antenne umfasst.

14. Ein nichttransitorisches, computerlesbares Medium, das Anweisungen umfasst, die, wenn sie von einem eine Antenne, eine Benutzerschnittstelle und eine Steuereinheit beinhaltenden Näheerkennungssystem ausgeführt werden, das Näheerkennungssystem dazu veranlassen, das Verfahren gemäß einem der Ansprüche 9-13 durchzuführen.

## Revendications

1. Un système de détection de proximité (102) comprenant :
une antenne (104) configurée pour recevoir un signal fourni par un dispositif (110) ;
une interface utilisateur (108) ; et
au moins un contrôleur (106) configuré pour
déterminer une distance du dispositif par rapport à l'antenne,
déterminer si la distance se trouve dans les limites d'une distance seuil de l'antenne,
déterminer, en réponse à la détermination du fait que le dispositif se trouve dans les limites de la distance seuil de l'antenne, si le dispositif est connu, où le dispositif est connu à condition que le dispositif soit présent dans les limites de la distance seuil de l'antenne pendant une première période de temps seuil, et où le dispositif n'est pas connu à condition que le dispositif ne se soit pas trouvé dans les limites de la distance seuil de l'antenne pendant une seconde période de temps seuil,
générer, en réponse à la détermination du fait que le dispositif n'est pas connu, une ou plusieurs instructions donnant l'instruction au système de détection de proximité d'activer l'interface utilisateur, et
exécuter les une ou plusieurs instructions.

2. Le système de la revendication 1, où l'interface utilisateur inclut un écran configuré pour afficher des informations en réponse à la réception des une ou plusieurs instructions, les informations étant fondées sur une identité du dispositif.

3. Le système de la revendication 1, où le fait de déterminer que le dispositif n'est pas connu comprend le fait de :
déterminer une identité du dispositif ;
comparer l'identité du dispositif à une liste de dispositifs connus ; et
déterminer si l'identité du dispositif figure dans la liste de dispositifs connus.

4. Le système de la revendication 3, où la détermination de l'identité du dispositif inclut l'analyse d'au moins un en-tête de paquet du signal.

5. Le système de la revendication 3, comprenant en outre une mémoire et/ou un stockage configuré pour être accessible à l'au moins un contrôleur et pour stocker la liste de dispositifs connus.

6. Le système de la revendication 1, où l'au moins un contrôleur est en outre configuré pour déterminer que le dispositif est un dispositif autorisé, et pour exécuter les une ou plusieurs instructions en réponse à la détermination du fait que le signal provient du dispositif autorisé, où le dispositif est autorisé à condition que le dispositif soit répertorié dans une base de données de dispositifs autorisés prédéterminés.

7. Le système de la revendication 1, où la détermination du fait que le dispositif se trouve dans les limites de la distance seuil inclut la détermination d'une intensité de signal du signal et, sur la base de l'intensité de signal du signal, la détermination de la distance du dispositif de l'antenne.

8. Le système de la revendication 7, où la distance du dispositif par rapport à l'antenne est déterminée uniquement sur la base de l'intensité de signal du signal.

9. Un procédé de détection de la proximité d'un dispositif (110), le procédé comprenant le fait de :
recevoir (302) un signal fourni par le dispositif ;
déterminer, sur la base du signal, une distance du dispositif par rapport à une antenne (104) ;
déterminer (306) si la distance se trouve dans les limites d'une distance seuil de l'antenne ;
déterminer (304), sur la base de la distance, que le dispositif n'est pas connu, où le dispositif est connu à condition que le dispositif se trouve dans les limites de la distance seuil pendant une première période de temps seuil, et où le dispositif n'est pas connu à condition que le dispositif ne se soit pas trouvé dans les limites de la distance seuil de l'antenne pendant une seconde période de temps seuil ;
générer, en réponse à la détermination du fait que le dispositif n'est pas connu, une ou plusieurs instructions donnant l'instruction à une interface utilisateur (108) de s'activer ; et
exécuter les une ou plusieurs instructions.

10. Le procédé de la revendication 9, où la détermination du fait que le dispositif n'est pas connu inclut la détermination d'une identité du dispositif, la comparaison de l'identité du dispositif à une liste prédéterminée de dispositifs connus, et la détermination du fait que l'identité du dispositif ne figure pas dans la liste prédéterminée de dispositifs connus.

11. Le procédé de la revendication 9, comprenant en outre le fait de :
déterminer que le dispositif est un dispositif autorisé, où un dispositif est autorisé à condition que le dispositif soit répertorié dans une base de données de dispositifs autorisés prédéterminés ; et
fournir les une ou plusieurs instructions en réponse à la détermination du fait que le signal provient du dispositif autorisé.

12. Le procédé de la revendication 9, comprenant en outre le fait de :
déterminer si le dispositif est connu en réponse à la détermination du fait que le dispositif se trouve dans les limites de la distance seuil.

13. Le procédé de la revendication 12, où la détermination du fait que le dispositif se trouve dans les limites de la distance seuil inclut la détermination d'une intensité de signal du signal et, sur la base de l'intensité de signal du signal, la détermination de la distance du dispositif par rapport à l'antenne.

14. Un support non transitoire lisible par ordinateur incluant des instructions, qui, lorsqu'elles sont exécutées par un système de détection de proximité comprenant une antenne, une interface utilisateur et un contrôleur, amènent le système de détection de proximité à effectuer le procédé de n'importe lesquelles des revendications 9 à 13.
